Europäisches Patentamt

European Patent Office

Office européen des brevets

(11) Veröffentlichungsnummer: **0 339 468**
**A2**

# (12) EUROPÄISCHE PATENTANMELDUNG

(21) Anmeldenummer: **89107045.0**

(22) Anmeldetag: **19.04.89**

(51) Int. Cl.⁴: **G06F 12/06**

(30) Priorität: **29.04.88 DE 3814657**

(43) Veröffentlichungstag der Anmeldung:
**02.11.89 Patentblatt 89/44**

(84) Benannte Vertragsstaaten:
**CH DE FR GB IT LI**

(71) Anmelder: **Siemens Aktiengesellschaft**
**Wittelsbacherplatz 2**
**D-8000 München 2(DE)**

(72) Erfinder: **Pfeiffer, Klaus, Dr. Dipl.-Phys.**
**St. Egidistrasse 27**
**D-8031 Gilching(DE)**
Erfinder: **Kosler, Wolfgang, Dipl.-Ing. (FH)**
**Aichacherstrasse 24**
**D-8000 München(DE)**
Erfinder: **Paulmichl, Erich, Dipl.-Ing.**
**Am Würmufer 9**
**D-8035 Gauting(DE)**

(54) **Verfahren zur Ansteuerung zweier Speicherbereiche durch einen Datenprozessor.**

(57) Die Erfindung betrifft ein Verfahren zur Ansteuerung zweier Speicherbereiche durch einen Datenprozessor, wobei der erste Speicherbereich fest vorgegeben und nur dem Datenprozessor zugeordnet ist, während der zweite Speicherbereich erweiterbar ist und zusätzlich von weiteren Prozessoren ansteuerbar ist.

Um eine Verschiebbarkeit des Adressbereichs ohne Dynamikverlust zu erreichen, wird der erste Speicherbereich bei einer Gesamtkapazität von $2^n$ Bytes aus mehreren Speicherblöcken (SpB1...SpB8) zu je $2^k$ Bytes gebildet und ist innerhalb eines Adressierbereichs von $2^{n+i}$ Adressen verschiebbar. Dabei wird jeder Speicherblock (SpB1...SpB8) mittels n Adressbits direkt angesteuert und aus den $n - k + i$ höchstwertigen Adressbits wird ein Gültigkeitsbit (G) gebildet welches jeweils einen der angesteuerten Speicherblöcke (SpB1...SpB8) aktiviert.

FIG 2

# Verfahren zur Ansteuerung zweier Speicherbereiche durch einen Datenprozessor

Die Erfindung betrifft ein Verfahren zur Ansteuerung zweier Speicherbereiche durch einen Datenprozessor, wobei der erste Speicherbereich fest vorgegeben und nur dem Datenprozessor zugeordnet ist, während der zweite Speicherbereich erweiterbar ist und zusätzlich von weiteren Prozessoren ansteuerbar ist.

Datenprozessoren von Vermittlungssystemen müssen, wenn sie für höchstmögliche Beanspruchungen ausgelegt sind, mit zwei architektonisch unterschiedlich angeschlossenen Speichern ausgestattet sein. Einer dieser Speicher ist der sogenannte lokale Speicher, welcher den gesamten Code des Datenprozessors sowie lokale Daten enthält und daraufhin optimiert ist, einen möglichst raschen Zugriff für den Datenprozessor zu bieten. Bei dem zweiten Speicher handelt es sich um einen Systemspeicher, der an einen Systembus angeschlossen ist und systemspezifische Daten enthält und zusätzlich auch weiteren Prozessoren des Systems zugänglich ist. Abhängig vom Ausbauzustand der Vermittlungsanlage ist dieser Systemspeicher unterschiedlich groß. Da die Adressbereiche des lokalen Speichers und des Systemspeichers nicht überlappend angeordnet sein sollten, im Systemspeicher aber wegen der übrigen Prozessoren der Adressbereich jeweils nur erweitert, aber nicht verschoben werden darf, ergibt sich die Forderung, abhängig vom Ausbauzustand der Vermittlungsanlage den Adressbereich des lokalen Speichers verschiebbar auszubilden.

Aufgabe der vorliegenden Erfindung ist es daher, ein Verfahren der eingangs genannten Art anzugeben, das eine Verschiebbarkeit des Adressbereiches des ersten Speicherbereiches ermöglicht, ohne daß es durch die Umsetzung der einzelnen Adressen zu einem Dynamikverlust kommt.

Diese Aufgabe wird erfindungsgemäß für ein Verfahren der oben genannten Art dadurch gelöst, daß der erste Speicherbereich bei einer Gesamtkapazität von $2^n$ Bytes aus mehreren Speicherblöcken zu je $2^k$ Bytes gebildet wird und innerhalb eines Adressierbereiches von $2^{n+i}$ Adressen verschiebbar ist, daß jeder Speicherblock mittels n Adressbits direkt angesteuert wird, und daß aus den $n - k + i$ höchstwertigen Adressbits ein Gültigkeitsbit gebildet wird, welches jeweils einen der angesteuerten Speicherblöcke aktiviert.

Bei dem erfindungsgemäßen Verfahren wird bei der Ansteuerung der einzelnen Speicherblöcke auf eine Transformation der Adressbits verzichtet. Lediglich zur Bildung eines Gültigkeits-Bits werden die höchstwertigen Adressbits herangezogen. Dadurch entfällt bei der Adressierung die Laufzeit durch eine Transformationsschaltung, so daß die Ansteuerung der einzelnen Speicherplätze schneller erfolgen kann. Die Bildung des Gültigkeitsbits erfolgt dabei parallel zur Ansteuerung der einzelnen Speicherplätze. Das Gültigkeitsbit wird dazu benutzt, nach Abrufen einer bestimmten Information, diese am jeweiligen Speicherausgang freizugeben.

Nachfolgend soll das erfindungsgemäße Verfahren anhand einer Zeichnung näher beschrieben werden.

Es zeigen

FIG 1 den prinzipiellen Aufbau der Steuerung eines Kommunikationssystems, bei welchem das erfindungsgemäße Verfahren anwendbar ist, und

FIG 2 die prinzipielle Ansteuerung der einzelnen Speicherblöcke eines Speicherbereichs gemäß dem erfindungsgemäßen Verfahren.

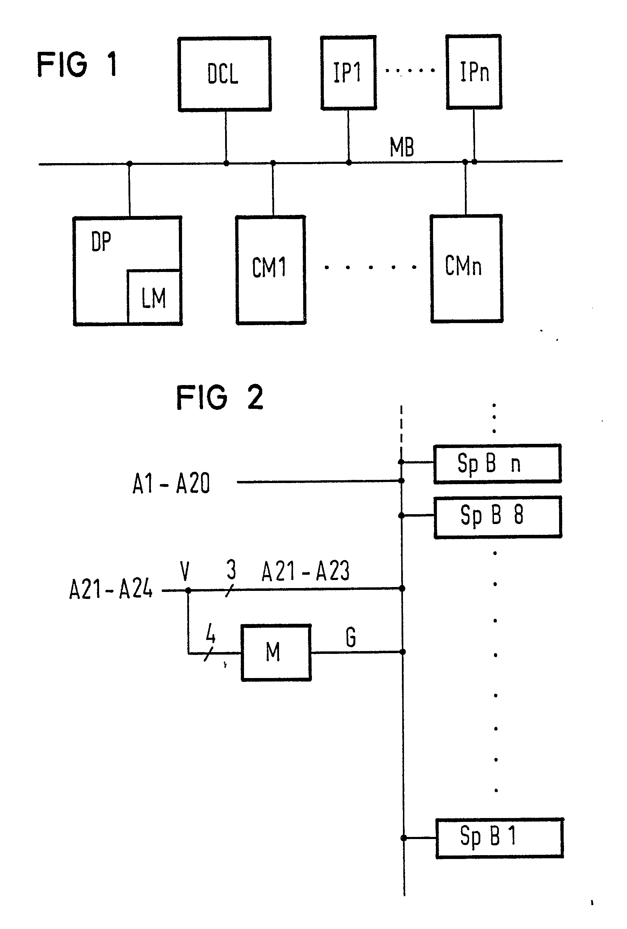

Figur 1 zeigt den prinzipiellen Aufbau der Steuerung eines Kommunikationssystems. Kernstück aller Steuerungen eines Kommunikationssystems ist ein Vermittlungsprozessor DP mit dem dazugehörenden Betriebssystem. Ein derartiger Vermittlungsprozessor besitzt in der Regel ein bis auf 16 Mbyte erweiterbaren Arbeitsspeicher, bzw. lokalen Speicher LM. Weiterhin besitzt die Steuerung Speichermodule bzw. Systemspeicher CM1...CMn, welche hochintegrierte dynamische RAM-Bausteine enthalten. In der Regel hat jeder Systemspeicher eine Kapazität von 2 Mbyte. Der Vermittlungsprozessor DP und die Systemspeicher CM1...CMn sind über einen standardisierten Multibus MB miteinander verbunden. Zu den Systemspeichern CM1...CMn hat nicht nur der Vermittlungsprozessor DP Zugriff, sondern zusätzlich werden diese Systemspeicher CM1...CMn auch von den Schnittstellenprozessoren IP1...IPn und dem Prozessor für Signalisierungssteuerung DCL benutzt. Auf die Funktionen der einzelnen Prozessoren soll hier nicht näher eingegangen werden, da diese nicht erfindungswesentlich sind.

Abhängig vom Ausbauzustand der Kommunikationsanlage ist die jeweilige Anzahl der einzelnen Systemspeicher unterschiedlich. Da der Vermittlungsprozessor DB sowohl auf den lokalen Speicher LM als auch auf die Systemspeicher CM1...CMn zurückgreift, dürfen die Adressbereiche nicht überlappend angeordnet sein. Da wegen der übrigen Prozessoren, die lediglich auf die Systemspeicher zurückgreifen können, die Adressbereiche der Systemspeicher nur erweitert werden, nicht jedoch verschoben werden können, muß abhängig vom Ausbauzustand der Anlage der lokale Speicher LM bezogen auf die Adressierung verschiebbar ausgebildet sein.

In Figur 2 ist die Ansteuerung von verschiebbaren Speicherbereichen anhand eines Beispieles dargestellt. Bei dem darge stellten Beispiel wird davon ausgegangen, daß ein Speicherbereich mit einer Kapazität von 8 Mbyte, aufgebaut aus 8 Speicherblöcken SpB1...SpB8 zu je 1 Mbyte innerhalb eines 16 Mbytes-Adressierraumes verschiebbar sein soll. Die Verschiebbarkeit ist in der Figur 2 durch Darstellung eines Speicherblocks SpBn angedeutet. So könnte z.B. eine derartige Verschiebung stattfinden, daß sich der Speicherblock SpB1 an der dem Speicherblock SpBn zugeordneten Stelle befinden könnte.

Es muß also die vom Vermittlungsprozessor DP verwendete Adresse zur Ansteuerung des Speichers entsprechend umgesetzt werden. Dies kann z.B. mittels sogenannter Mapper-Schaltungen geschehen. Dabei ergibt sich der Nachteil, daß die Laufzeit durch den Mapper in der Adressierungszeit enthalten ist. Bei für Mikroprozessoren der obersten Leitungsklasse üblichen Arbeitstaktfrequenzen von 16 Mhz und darüber bedeutet die Mapper-Laufzeit, daß mindestens ein "wait-state" notwendig wird, wodurch die Leistungsfähigkeit um mindestens 30 Prozent reduziert würde.

Da bei dem dargestellten Ausführungsbeispiel von einem gesamten Speichervolumen von 16 Mbyte ausgegangen wird, sind zur Adressierung eines 1 Byte umfassenden Speicherplatzes 24 Adressbits A1...A24 notwendig. Dabei werden erfindungsgemäß die Adressbits A1...A23 den einzelnen Speicherblöcken direkt zugeführt. Das vierundzwanzigste Adressbit A24 bleibt vorerst ungenutzt. Das bedeutet im dargestellten Ausführungsbeispiel bei 16 Anordnungsmöglichkeiten für einen Speicherblock, daß, da das höchstwertige Bit nicht ausgewertet wird, jeweils 2 Speicherblöcke gleichzeitig adressiert werden, da die Adressen im dargestellten Beispiel modulo 8 ausgewertet werden, in dem an jeder 8 Mbyte-Grenze ein wraparound ausgeführt wird.

Die 4 höchstwertigen Adressbits A21...A24 werden im dargestellten Beispiel über einen Verzweigungspunkt V einem Mapper M zugeführt. In diesem Mapper M wird je nach Lage der einzelnen anzusteuernden Speicherblöcke ein Gültigkeitsbit G gebildet, das jeweils einen der zwei angesteuerten Speicherblöcke aktiviert.

Es ist zu erkennen, daß durch das erfindungsgemäße Verfahren die Adressierzeit nicht um die Mapper-Laufzeit verlängert wird. Die Adressierung der einzelnen Speicherplätze und die Bildung des Gültigkeitsbits G durch den Mapper M erfolgt zeitlich parallel. Das Gültigkeitsbit G wird dann dazu benutzt, nach dem Abrufen einer bestimmten Information - in bei diesem Ausführungsbeispiel z.B. zwei Speicherblöcken - jeweils einen bestimmten Speicherausgang freizugeben.

## Ansprüche

1. Verfahren zur Ansteuerung zweier Speicherbereiche durch einen Datenprozessor, wobei der erste Speicherbereich fest vorgegeben und nur dem Datenprozessor zugeordnet ist, während der zweite Speicherbereich erweiterbar ist und zusätzlich von weiteren Prozessoren ansteuerbar ist, **dadurch gekennzeichnet,** daß der erste Speicherbereich bei einer Gesamtkapazität von $2^n$ Bytes aus mehreren Speicherblöcken (SpB1...SpB8) zu je $2^k$ Bytes gebildet wird und innerhalb eines Adressierbereichs von $2^{n+i}$ Adressen verschiebbar ist, daß jeder Speicherblock (SpB1...SpB8) mittels n Adressbits direkt angesteuert wird, und daß aus den n - k + i höchstwertigen Adressbits ein Gültigkeitsbit (G) gebildet wird, welches jeweils einen der angesteuerten Speicherblöcke (SpB1...SpB8) aktiviert.

FIG 1

DCL    IP1 ·····  IPn

MB

DP

LM

CM1  · · · · · ·  CMn

FIG 2

A1 – A20

Sp B n

Sp B 8

A21 – A24    V    3    A21 – A23

4    M    G

Sp B 1